# EUROPEAN PATENT SPECIFICATION

(11) **EP 0 447 641 B1**
(45) Date of publication and mention of the grant of the patent: **13.07.1994**
(21) Application number: 90124090.3
(22) Date of filing: 13.12.1990
(51) Int. Cl.: G01P 3/44

(54) **Speed detecting device for non-driving wheels of vehicles**
Geschwindigkeitsmessvorrichtung für nichtangetriebene Räder an Fahrzeugen
Dispositif détecteur de vitesse pour roues non motrices de véhicules

(30) Priority: 30.01.1990 IT 6707190
(43) Date of publication of application: 25.09.1991
(73) Proprietor: SKF INDUSTRIE S.P.A., I-10123 Torino (IT)
(72) Inventor: Vignotto, Angelo, I-10134 Torino (IT)
(74) Representative: Lotti, Giorgio

(56) References cited:
- EP-A- 0 317 423
- EP-A- 0 323 159
- DE-U- 8 816 381

## Description

This invention is referred to a speed detecting device for non-driving wheels of vehicles.

The common widespread speed detecting systems for vehicle wheels consist of a sensor and a phonic wheel, and applied on the bearing of the wheel-hub, they should have the following characteristics:
- be easily mounted on the bearing;
- keep a correct and constant positioning in time, in radial, axial and circumferential directions;
- have the possibility of being easily and quickly disassembled in the case of a breakdown of the same devices or of the members that are connected wiht them;
- be easily and reliably connected with the vehicle's computer;
- the sensor must be protected from external contaminating elements;
- the electronics must be sheltered from crashes and as far as possible from all heat sources.

Tha actual solutions have only a few of the foregoing characteristics, combined in between them in various ways.

However, the first two above mentioned characteristics, that is to be easily mounted and correctly positioned have not been obtained satisfactorily.

It is obvious that these are basic characteristics, as the first one affects the assembling time and expense, while the second one is determinant as to reliability and for correct operation of the device.

A speed gauging device mounted on a non-driving wheel is known from DE-U-8816381. This system provides a sensor which is either force-fitted in a trough hole in the axle or is driven onto a threaded nut thet keeps the inner race of the bearing in position. In this second case, the sensor is steadily fitted on said nut by means of a metal cup.

EP-A-0317423 discloses a speed gauging sensor which is directly deep-drawn onto the axle of a non-driving wheel without any additional fixing member.

Both of the cited references fail to disclose a speed detecting device that can be releasably secured to the bearing both axially and circumferentially in order to attain the aforementioned characteristics.

A purpose of the present invention is to provide a device having all the above mentioned charateristics and in particular those ones, previously described, that the prior art is short of.

For these and other purposes, that will appear more clearly further on, it is an object of this invention to provide a speed detecting device according to claim 1 or 2.

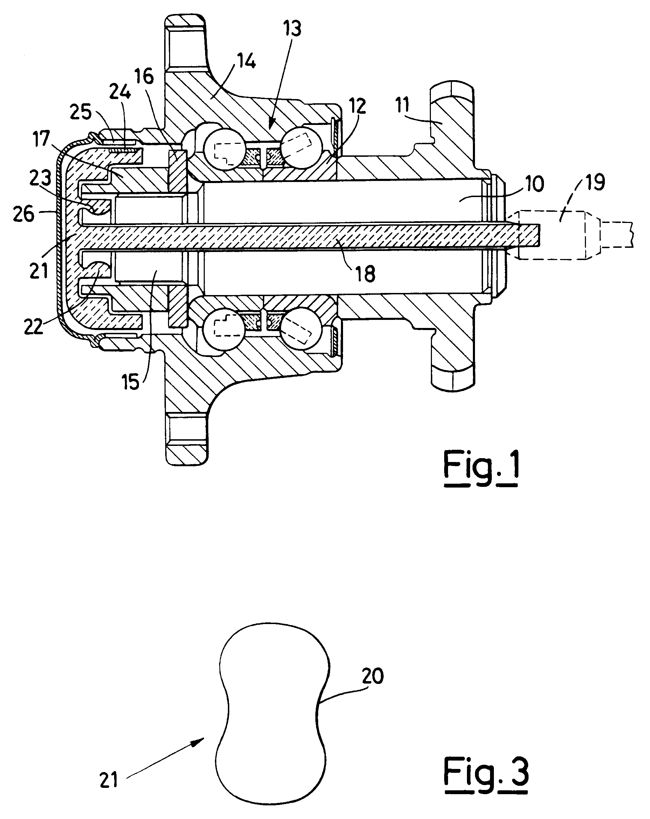

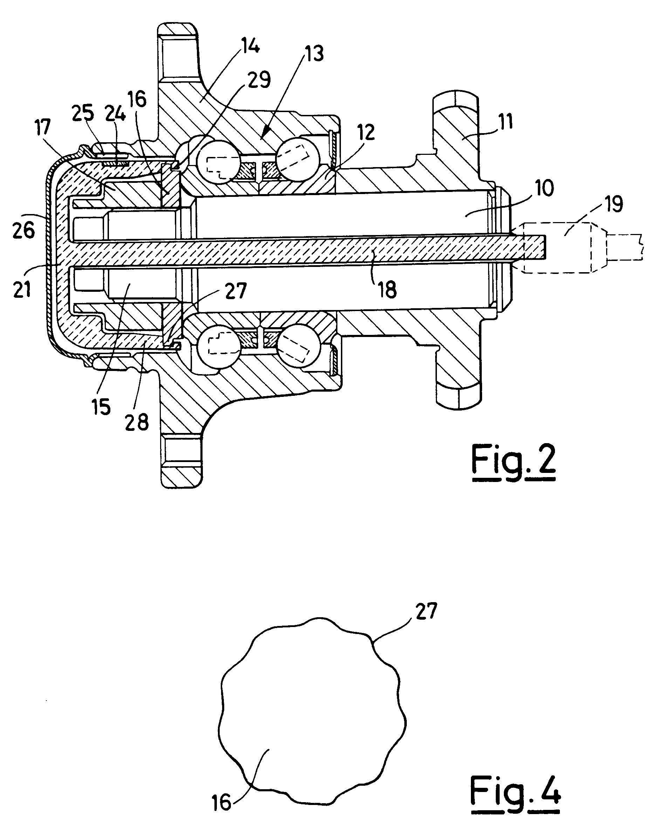

The device according to the invention is now going to be described in two alternative embodiments, referring to the enclosed drawings, in which: figures 1 and 2 are axial cross sections of a wheel hub
having the device according to this invention; figures 3 and 4 are drafts showing details of figs. 1 and 2.

Traditionally, a wheel hub is provided with an axle 10 that is slipped into an axle holder 11 and on which the inner races 12 of a bearing 13 are fixed. The outer race of the bearing is formed by wheel-holder body 14.

The axle 10 has an end 15 with a restricted cross section on which a washer 16 is slipped; this is meant to compact the inner races 12 of the bearing 13 against the axle-holder 11.

A nut 17 is screwed on the threaded end 15 so as to block the above described unit.

Referring now expressely to the embodiment of figs. 1 and 3, the nut 17 is a traditional one, with a final lenght that, after the screwing, is pressed down into a milled seat obtained in the end 15 of the pin 10.

This operation, that is traditionally used, prevents the nut 17 from unscrewing off the axle 10 while it is working.

According to this invention, the speed detecting device consists of a stem 18 made of sufficiently rigid material and which is slipped in a through hole of the axle 10. This stem leads the electronics towards the inside; these are to be connected with the computer by means of a connector 19 which is fitted on the outside of the axle 10.

The stem 18 has a cap 21, the front shape of which is schematically shown in fig. 3. This shape allows it to be mounted on nut 17 so that it can cover with its hollow parts 20 the above mentioned pressed down part of the nut. In this way it is kept centered position with respect to the nut itself and it can be easily oriented in the right way during the assembly.

Tongues 22 are obtained inside cap 21 for axially and circumferentially blocking stem 18; said tongues slip into the corresponding slots 23 of the end 15 of the axle 10.

The cap 21 of the stem 18 holds the sensor 24 which is electrically connected to the computer through the stem 18 and is facing the phonic wheel 25. This can be mounted directly on the inside of body 14 or as an appendix of the lid 26 that covers the unit for protecting it from crashes and external contaminating elements.

In the embodiment of figs. 2 and 4 the nut 17 has no portions that crush, so the circumferential blockage of cap 21 is realized by simply forming a waved circumferential surface 27 (fig. 4) on the washer 16 on which the cap 21 spring locks. For such purpose, the cap 21 will be provided with a circumferential undercut obtained on one of its cylindrical appendixes 28. The tongues 29 on the end of the cylindrical appendix 28 realize the blocking in the axial direction of the cap 21, that is they prevent it from being accidentally untightened.

It is obvious that this realization is also equivalent in the frequent case in which the nut 17 and the washer 16 are integral.

Both of the above-described embodiments allow to mount the speed detecting device extremely simply and quickly, and realize a precise centering and positioning, both circumferentially and axially, as it is in the purposes of this invention.

If necessary, in case of maintenance or breakdown, it is quite easy to release the cap 21 from its axial and circumferential restraints as the cap 21 and the stem 18, although being rigid, are elasticly yielding, for example in plastic material.

## Claims

1. A speed detecting device for non-driving wheels of vehicles consisting of a sensor (24) and of a phonic wheel (25) mounted respectively on the axle (10) and on a flanged body (14) carrying the wheel; the balls of a rolling bearing being interposed between the axle (10) and the body (14) for realizing the reciprocal rotation of said elements; the sensor (24) being mounted on the cap (21) of a stem (18) which is slipped in a through hole of the axle for being electrically connected to the vehicle's computer; the balls of the bearing (13) being mounted on inner races (12) fitted on the axle and axially held by blocking means (16,17), said blocking means (17) being screwed onto the outer end (15) of the axle (10) facing the cap (21) of the stem (18); characterised in that the cap (21) has a peripheral wave-like surface that copies corresponding side waves of said blocking means (16,17) for simplifying the orientation of the sensor (24) when the unit gets assembled; furthermore, the cap (21) having ulterior appendixes (29) that engage the axle (10) in its blocking means (16,17) so as to guarantee the axial and circumferential centering of the cap itself.

2. A speed detecting device for non-driving wheels of vehicles consisting of a sensor (24) and of a phonic wheel (25) mounted respectively on the axle (10) and on a flanged body (14) carrying the wheel; the balls of a rolling bearing being interposed between the axle (10) and the body (14) for realizing the reciprocal rotation of said elements; the sensor (24) being mounted on the cap (21) of a stem (18) which is slipped in a through hole of the axle for being electrically connected to the vehicle's computer; the balls of the bearing (13) being mounted on inner races (12) fitted on the axle and axially held by blocking means (16,17), said blocking means (17) being screwed onto the outer end (15) of the axle (10) facing the cap (21) of the stem (18); characterised in that the cap (21) has a peripheral surface with hollow parts (20) copying the corresponding shape of said blocking means (17) for simplifying the orientation of the sensor (24) when the unit gets assembled; the cap (21) having further tongues (22) that extend from its inside and are rounded towards the axle (10) so as to engage corresponding slots (23) of the axle itself and guarantee the axial and circumferential centering of the cap itself.

3. A device according to claim 2 in which the blocking means consist of a washer (16) slipped on the end (15) of the axle (10), pressed against the inner races (12) of the bearing (13) by means of a nut (17) that is screwed on the threaded end (15) of axle (10); the nut (17) having peripheral side surfaces suitable to be pressed down on corresponding axially disposed seats of the end (15) of the axle (10); the cap (21) having a substantially circular shape and being provided with two diametrally opposed hollow parts (20) copying said side parts of the nut (17) being pressed down on the end (15).

4. A device according to claim 1 characterized in that the blocking means consist of a washer (16) slipped on the end (15) of the axle (10), and pressed against the inner races (12) of the bearing (13) by means of a nut (17) that is screwed on the threaded end (15) of the axle; and in that the washer (16) has a substantially circular waved periphery (27) that is made to fit inside a corresponding undercut obtained in a cylindrical appendix (28) of the cap (21); the circular extremity of cap (21) contacting axially said periphery (27) of the washer (16).

5. A device according to claims 1 and 4 characterized in that the nut (17) and the washer (16) are realized as a whole is one piece.

## Patentansprüche

1. Vorrichtung zur Erfassung der Drehzahl nicht angetriebener Fahrzeugräder, bestehend aus einem Sensor (24) und einem phonischen Rad (25), die auf der Achse (10) bzw. auf einem mit einem Flansch versehenen, das Fahrzeugrad tragenden Körper (14) befestigt sind; die Kugeln eines Kugellagers sind zwischen der Achse (10) und dem Körper (14) eingelagert, um die gegenläufige Rotation genannter Elemente zu gewährleisten; der Sensor (24) ist am Aufsatz (21) eines Stabes (18) befestigt, welcher durch eine Durchgangsbohrung der Achse geführt ist, um an den Fahrzeugcomputer elektrisch angeschlossen zu sein; die Kugeln des Kugellagers (13) sind auf Innenringen (12) montiert, die auf der Achse aufgesetzt sind und in achsialer Richtung durch Sperrvorrichtungen (16, 17) gehalten werden, wobei die Sperrvorrichtungen (17) auf das äußere Ende (15) der Achse (10) aufgeschraubt sind, welches dem Aufsatz (21) des Stabes (18) gegenüberliegt; dadurch gekennzeichnet, daß der Aufsatz (21) eine wellenförmige Umfangsfläche aufweist, die den entsprechenden Seitenwellen der Sperrvor-richtungen (16, 17) entspricht, um die Ausrichtung des Sensors (24) beim Einbau der Einheit zu vereinfachen; daß der Aufsatz (21) außerdem äußere Fortsätze (29) aufweist, welche in die Achse (10) in ihren Sperrvorrichtungen (16, 17) eingreifen, um ein Axial- und ein Umfangszentrieren des Aufsatzes selbst zu gewährleisten.

2. Vorrichtung zur Erfassung der Drehzahl nicht angetriebener Fahrzeugräder, bestehend aus einem Sensor (24) und einem phonischen Rad (25), die auf der Achse (10) bzw. auf einem mit einem Flansch versehenen, das Fahrzeugrad tragenden Körper (14) befestigt sind; die Kugeln eines Kugellagers sind zwischen der Achse (10) und dem Körper (14) eingelagert, um die gegenläufige Rotation genannter Elemente zu gewährleisten; der Sensor (24) ist am Aufsatz (21) eines Stabes (18) befestigt, welcher durch eine Durchgangsbohrung der Achse geführt ist, um an den Fahrzeugcomputer elektrisch angeschlossen zu sein; die Kugeln des Kugellagers (13) sind auf Innenringen (12) montiert, die auf der Achse aufgesetzt sind und in axialer Richtung durch Sperrvorrichtungen (16, 17) gehalten werden, daß die Sperrvorrichtungen (17) auf das äußere Ende (15) der Achse (10) aufgeschraubt sind, welches dem Aufsatz (21) des Stabes (18) gegenüberliegt; dadurch gekennzeichnet, daß der Aufsatz (21) eine Umfangsfläche mit vertieften Abschnitten (20) aufweist, welche der entsprechenden Form der Sperrvorrichtungen (17) entsprechen, um die Ausrichtung des Sensors (24) beim Einbau der Einheit zu vereinfachen; daß der Aufsatz (21) ferner Zungen (22) aufweist, die sich von seiner Innenseite erstrecken und in Richtung der Achse (10) abgerundet sind, um in entsprechende Nuten (23) der Achse selbst einzugreifen und ein Axial- und ein Umfangszentrieren des Aufsatzes selbst zu gewährleisten.

3. Vorrichtung nach Anspruch 2, in der die Sperrvorrichtung aus einer Unterlegscheibe (16) besteht, die auf das Ende (15) der Achse (10) aufgeschoben und gegen die Innenringe (12) des Kugellagers (13) mittels einer Mutter (17) gedrückt wird, welche dazu auf das mit einem Gewinde versehenen Ende (15) der Achse (10) geschraubt wird; die Mutter (17) weist Umfangsseitenflächen auf, die geeignet sind, um auf entsprechende axial ausgerichtete Sitze am Ende (15) der Achse (10) nach unten gedrückt zu werden; der Aufsatz (21) weist eine im wesentlichen kreisförmige Form auf und ist mit zwei gegenüberliegenden vertieften Abschnitten (20) versehen, die den auf das Ende (15) nach unten gedrückten Seitenabschnitten der Mutter (17) entsprechen.

4. Vorrichtung nach Anspruch 1, dadurch gekennzeichnet, daß die Sperrvorrichtung aus einer Unterlegscheibe (16) besteht, die auf das Ende (15) der Achse (10) aufgeschoben und gegen die Innenringe (12) des Kugellagers (13) mittels einer Mutter (17) gedrückt wird, welche dazu auf das mit einem Gewinde versehenen Ende (15) der Achse geschraubt wird; und daß die Unterlegscheibe (16) eine im wesentlichen kreisförmige gewellte Peripherie (27) aufweist, die derart gestaltet ist, daß sie in eine entsprechende Hinterschneidung in einem zylindrischen Fortsatz (28) des Aufsatzes (21) paßt; der kreisförmige Rand des Aufsatzes (21) berührt in Axialrichtung die Peripherie (27) der Unterlegscheibe (16).

5. Vorrichtung nach Anspruch 1 und 4, dadurch gekennzeichnet, daß die Mutter (17) und die Unterlegscheibe (16) einstückig ausgebildet sind.

## Revendications

1. Dispositif de détection de vitesse pour roues non motrices de véhicules, comprenant un capteur (24) et une roue phonique (25) montés respectivement sur la fusée (10) et sur un corps à bride (14), qui porte la roue ; les billes d'un roulement étant interposées entre la fusée (10) et le corps (14) pour permettre la rotation relative de ces éléments ; le capteur (24) étant monté sur le chapeau (21) d'une tige (18) qui est enfilée dans un trou traversant de la fusée pour être ainsi connecté électriquement à l'ordinateur du véhicule ; les billes du roulement (13) étant montées sur des bagues intérieures (12) emmanchées sur la fusée et retenues axialement par des moyens de blocage (16, 17), lesdits moyens de blocage (17) étant vissés sur l'extrémité extérieure (15) de la fusée (10) qui est tournée vers le chapeau (21) de la tige (18) ;
caractérisé en ce que le chapeau (21) possède une surface périphérique ondulée qui épouse des ondulations latérales correspondantes desdits moyens de blocage (16, 17) pour simplifier l'orientation du capteur (24) au moment de l'assemblage de l'unité ; le chapeau (21) portant par ailleurs d'autres appendices (29) qui coopèrent avec la fusée (10) au niveau de ses moyens de blocage (16, 17) de manière à garantir le centrage axial et circonférentiel du chapeau.

2. Dispositif de détection de vitesse pour roues non motrices de véhicules, comprenant un capteur (24) et une roue phonique (25) montés respectivement sur la fusée (10) et sur un corps à bride (14), qui porte la roue ; les billes d'un roulement étant interposées entre la fusée (10) et le corps (14) pour permettre la rotation relative de ces éléments ; le capteur (24) étant monté sur le chapeau (21) d'une tige (18) qui est enfilée dans un trou traversant de la fusée pour être ainsi connecté électriquement à l'ordinateur du véhicule ; les billes du roulement (13) étant montées sur des bagues intérieures (12) emmanchées sur la fusée et retenues axialement par des moyens de blocage (16, 17), lesdits moyens de blocage (17) étant vissés sur l'extrémité extérieure (15) de la fusée (10) qui est tournée vers le chapeau (21) de la tige (18) ;
caractérisé en ce que le chapeau (21) possède une surface périphérique munie de parties creuses (20) qui épousent la forme correspondante desdits moyens de blocage (17) pour simplifier l'orientation du capteur (24) au moment de l'assemblage de l'unité ; le chapeau (21) comportant par ailleurs des languettes (22) qui partent de sa face intérieure et sont arrondies vers la fusée (10) de manière à s'engager dans des fentes correspondantes (23) de la fusée, pour garantir le centrage axial et circonférentiel du chapeau.

3. Dispositif selon la revendication 2, dans lequel les moyens de blocage sont constitués par une rondelle (16) enfilée sur l'extrémité (15) de la fusée (10), et pressée contre les bagues intérieures (12) du roulement (13) au moyen d'un écrou (17) qui est vissé sur l'extrémité filetée (15) de la fusée (10) ; l'écrou (17) présentant des surfaces latérales périphériques appropriées pour être repoussées sur des logements correspondants, disposés axialement, de l'extrémité (15) de la fusée (10) ; le chapeau (21) ayant une forme sensiblement circulaire et étant muni de deux parties creuses (20) diamétralement opposées qui épousent lesdites parties latérales de l'écrou (17) qui sont repoussées sur l'extrémité (15).

4. Dispositif selon la revendication 1, caractérisé en ce que les moyens de blocage sont composés d'une rondelle (16) enfilée sur l'extrémité (15) de la fusée (10) et pressée contre les bagues intérieures (12) du roulement (13) au moyen d'un écrou (17) qui est vissé sur l'extrémité filetée (15) de la fusée ; et en ce que la rondelle (16) présente une périphérie ondulée (27) sensiblement circulaire qui s'encastre dans une gorge correspondante ménagée dans un appendice cylindrique (28) du chapeau (21) ; l'extrémité circulaire du chapeau (21) étant en contact axial avec ladite périphérie (27) de la rondelle (16).

5. Dispositif selon les revendications 1 et 4, caractérisé en ce que l'écrou (17) et la rondelle (16) sont réalisés en une seule pièce.
